# EUROPEAN PATENT SPECIFICATION

(11) **EP 3 006 491 B1**
(45) Date of publication and mention of the grant of the patent: **07.12.2016**
(21) Application number: 14188135.9
(22) Date of filing: 08.10.2014
(51) Int. Cl.: C08J 9/00, C08L 27/06, C08L 11/00, C08J 9/10

(54) **LOW SMOKE, FLEXIBLE INSULATION FOAM**
RAUCHARMER, FLEXIBLER ISOLATIONSSCHAUM
MOUSSE ISOLANTE FLEXIBLE À FAIBLE PRODUCTION DE FUMÉE

(43) Date of publication of application: 13.04.2016
(73) Proprietor: Armacell Enterprise GmbH & Co. KG, 12529 Schönefeld OT Waltersdorf (DE)
(72) Inventor: Zauner, Christoph, 48366 Laer (DE); Bettermann, Miroslav, 47138 Duisburg (DE); Quante, Heribert, 37696 Marienmünster (DE)
(74) Representative: von Füner, Nicolai

(56) References cited:
- US-A- 4 082 876
- US-A- 4 692 475

## Description

### Field of the invention

The present invention relates to a material for thermal and / or acoustic insulation comprising an expanded polymer (blend) based on PVC (polyvinyl chloride) and/or its copolymer(s) and/or its terpolymer(s) and at least one additional chlorinated organic polymer, the process of manufacturing such a material, and the use of such a material.

### Backround of the invention

Flame resistance and smoke suppression play an important role for insulation products, especially when such products are used in house, in particular in public buildings. In addition, the focus on smoke suppression became even more important for insulation material, when the single burning item test (SBI-test) was implemented and became obligatory within the European Union. Such test classifies mainly three aspects of the burning behaviour: flame spread / heat release, smoke production and flaming particles / droplets. The SBI-test (EN ISO 13823) substituted the former national tests for evaluating the fire performance of building products. The national tests often did not cover the measurement of smoke development of building products (e.g. DIN 4102, BS 476). Consequently, the reduction of smoke development of many building products - including flexible elastomeric foams (FEF's) - was not a major focus of their development.

Flexible elastomeric foams (FEF's) are widely used for thermal and acoustic insulation. Such materials are more or less solely based upon two different rubbers: nitrile butadiene rubber (NBR, often blended with PVC) or ethylene propylene diene rubber (EPDM). NBR and NBR/PVC based FEF's are the most widespread polymers for standard FEF's, while EPDM is mainly used for applications requiring higher temperature resistance, e.g. solar applications. Unfortunately, the FEF products based upon each of the aforementioned rubbers show significant drawbacks regarding fire performance and / or smoke development. EPDM based FEF's, e.g. Kaiflex^{®} EPDM plus (DIN EN 13501-1), Aeroflex^{®} KKS (DIN EN 13501-1) or HT/Armaflex^{®} (DIN EN 13501-1: D_{L}-s3, d0 / D-s3, d0) neither achieve a high flame resistance, nor low smoke development. Commercially available products based upon NBR, e.g. Aeroflex^{®} FIRO (DIN EN 13501-1: B_{L}-s3, d0 / B-s3, d0) can obtain a high flame resistance (B-class), but achieve only an s3-rating for smoke development (worst rating).

Several attempts were already made to improve the smoke development of flexible elastomeric foams (FEF's). The majority of the approaches focus on either covering the insulation or modifying the recipes of current NBR based materials.

EP2345535 claims a covering system comprising one layer of metal foil and one layer of glass fibre or two layers of glass fibres to cover common FEF's to achieve the best classification possible for organic based products (DIN EN 13501-1: B-s1, d0). Another approach is the use of an intumescent foil and a fabric layer on top of an FEF, but such system only achieves a "B-s2, d0" classification for sheets (Kaiflex^{®} KKplus s2 sheets). Furthermore, the FEF below such covering already needs to show a high level of flame resistance.

Besides that, such coverings show in general several drawbacks: they are difficult to cut and less flexible compared to uncovered FEF foams, leading to difficulties and delays during installation. Furthermore, it is even more difficult to close the seams sufficiently to prevent them from opening in case of fire. Otherwise, the covering cannot securely prevent the FEF for a sufficient period of time from emitting huge quantities of smoke.

The recipe modification of current NBR based materials is another approach to reduce the smoke development of FEF's. Unfortunately, such products only achieve an improvement in the classification of tubes from "B_{L}-s3, d0" to "B_{L}-s2, d0", but sheets do not improve, they only achieve - without additional covering - a "B-s3, d0" classification (e.g. K-Flex^{®} ST, Kaiflex^{®} KKplus). Furthermore, such levels of flame retardancy are often achieved by using high amounts of brominated flame retardants. Such flame retardants are critical concerning their environmental impact and therefore are already partially prohibited. Besides that, such flame retardants create huge amounts of black smoke, making it impossible to further reduce smoke development within such compounds. Furthermore, NBR is forming hydrogen cyanide in case of burn.

US 4082876 A discloses an expanded polymeric material as well as a method for chemically embossing a foamed composition without whitening and cracking of the surface by adding sulphur and synthetic rubber to a vinyl chloride resin preparation, wherein e.g. an acrylonitrile butadiene rubber (NBR) is used.

US 4692475 discloses a foamable polymeric composition comprising at least one foamable polymer and/or monomer or coreactant and an effective amount of a blowing agent composition, wherein e.g. an acrylonitrile butadiene rubber (NBR) and polyvinyl chloride (PVC) are used in a weight ratio of 50 phr : 50 phr.

Beside these approaches, EP2261305 claims an expanded elastomeric material comprising at least 50wt% (50 percent by weight) of polychloroprene (CR) based on the total polymer content. Such material achieves a "B-s2, d0" classification for sheets and a "B_{L}-s1, d0" classification for tubes without additional covering (Armaflex^{®} Ultima).

Regarding the fire performance and smoke development, such material should rather be the product of choice, but due to higher thermal conductivity (according to EN 12667) compared to aforementioned NBR based FEF's (Armaflex® Ultima: ≤ 0,040W/m*K @ 0°C; AF/Armaflex^{®}: ≤ 0,033W/m*K @ 0°C), lower water vapour transmission resistance (WVT value according to EN 12086: Armaflex^{®} Ultima: ≥ 7.000; AF/Armaflex^{®} ≥ 10.000) and higher costs (among other things due to higher densities), the fields of application are limited.

### Summary of the invention

Therefore, a major object of the present invention is to provide a FEF not showing the aforementioned disadvantages, means combining a low thermal conductivity (≤ 0,037 W/m*K @ 0°C) with a high flame resistance and low smoke development for tubes and/or sheets (B_{L}-s2, d0 / B-s2, d0 according to EN ISO 13823) at costs and densities comparable to the aforementioned NBR based FEF's without using brominated flame retardants.

To solve the above mentioned problems, the present invention provides an expanded polymeric material as disclosed in claim 1. Preferred embodiments are disclosed in claims 2 to 13.

Surprisingly it is found that such a versatile FEF material can be obtained by expanding and crosslinking a polymer blend of - on the one hand - at least 55 phr, preferably at least 65 phr of polyvinyl chloride (PVC) and/or vinyl chloride (PVC) copolymer and/or vinyl chloride (PVC) terpolymer and - on the other hand - at least 15 phr, preferably at least 25 phr of at least one additional chlorinated organic polymer that is crosslinkable by sulphur and/or metal oxides and/or thiadiazoles.

The use of PVC copolymer or PVC terpolymer can improve the flexibility and therefore workability of the material, especially when using PVC/EVA terpolymer. Due to the higher amount of chlorine within PVC compared to CPE (chlorinated polyethylene), less or even no additional flame retardant (especially brominated or boron based) is necessary to achieve the required levels of flame retardancy and low smoke development.

Phr (parts per hundred rubber) in the context of the current invention describes the total amount of all polymers, not limited to rubbers.

Preferably the vinyl chloride copolymer and/or vinyl chloride terpolymer comprises acetate or acrylate groups.

Preferably the vinyl chloride terpolymer is a vinyl chloride ethylene vinylacetate terpolymer (PVC/EVA terpolymer).

The additional chlorinated polymer is preferably polychloroprene (CR) and/or chlorosulfonated polyethylene (CSM) and/or chlorobutyl rubber (CIIR), preferably polychloroprene (CR) due to the highest level of chlorine and best balance between cost, processability and technical properties.

The claimed material further comprises at least one filler, and may additionally comprise at least one plasticizer, at least one crosslinking system and at least one chemical blowing agent. Furthermore, the material may comprise additional flame retardants and additives to fulfil special demands and regulations defined by the area of application.

All quantities concerning the claimed material are related to a total of 100 phr of polymer content. The total amount always comprises the aforementioned 100 phr of the polymer, too. The overall quantities of all ingredients sum up to at least 300 phr, preferably at least 400 phr, but less than 1000 phr, preferably less than 850 phr, especially preferred less than 700 phr. In other words, the polymer content related to the overall quantity of all ingredients is ≤ 33,3 wt% (percent by weight), preferably ≤ 25,0 wt%, but > 10,0 wt%, preferably > 11,8 wt%, especially preferred > 14,3 wt% (the given percentages are rounded to the first decimal place). Higher polymer contents lead to worse fire performance, while lower polymer contents lead to a material of higher density as well as worse mechanical and insulation properties.

The polymer content may comprise at least 3 phr, preferably at least 5 phr of polybutadiene (butadiene rubber, BR) to improve processability and curing rate. The use of BR will improve the gas tightness in the early stage of vulcanisation and especially expansion due to its high curing rate. It furthermore helps using high amounts of PVC and/or its copolymer(s) and/or terpolymer(s) during a continuous vulcanisation and expansion process without counter-pressure. For the same reason, the use of BR can lower the density of the claimed material. Additionally, the polymer content of the claimed material may comprise all kind of polymers like - but not restricted to - ACM/AEM, AU/EU, BR, BIIR, CIIR, (G)(E)CO, EPM/EPDM, EVM, SBR, (H)NBR, FKM/F(E)PM, GPO, IR, IIR, (V)MQ, NR, T, PE, PP, PET, PBT, PC, PS, PA, PU, PTFE, PMMA etc.

To ensure sufficient fire resistance and low smoke development, the use of non-halogenated polymers should be limited to less than 30 phr, preferably less than 20 phr, especially preferred to less than 10 phr. The feasible quantity of non-halogenated polymers depends on the required fire and smoke performance as well as on the required dimensions and densities of the material, due to the impact on fire load.

The claimed material further comprises at least 80 phr, preferably at least 120 phr,
especially preferred at least 160 phr of inorganic filler, preferably of metal and/or half metal chalcogen (i.e. compound of oxygen, sulphur) nature. The inorganic filler may be an aluminium compound, such as aluminium silicates, oxides, hydroxides etc., e.g. ATH (aluminium hydroxide), and/or a silicon based compound, such as silicates, quartz, zeolites etc., or mineral based accordingly, e.g. gypsum, clay, huntite, hydromagnesite, perlite, vermiculite, chalk, slate, graphite, talc/mica etc., or any mixtures thereof. Preferred are inorganic fillers that cool down the fire by releasing water at temperatures above 180°C, or dilute or inhibit the oxygen supply of the flame by the release of carbon dioxide, carbon monoxide, etc. at temperatures above 180°C. Especially preferred are aluminium hydroxide (ATH), magnesium hydroxide, huntite and hydromagnesite due to the high level of water release. Furthermore, such materials do not increase the smoke development.

The claimed material may comprise at least 15 phr, preferably at least 30 phr, especially preferred at least 50 phr - related to the polymer content - of at least one plasticizer. The plasticizers should have a positive impact on flame retardancy and smoke suppression.

Therefore, preferred plasticizers are phosphate plasticizers or chlorinated plasticizers or mixtures thereof. The chlorinated plasticizers are preferably chlorinated paraffins and/or chlorinated fatty acid substituted glycerines and/or chlorinated alpha-olefins having a chlorine content of at least 20 wt%, with respect to the weight of the chlorinated plasticizer, preferably at least 30wt%, especially preferred at least 45 wt% according to DIN 53474, especially preferred are long chain chlorinated plasticizers of C > 17.

Such highly chlorinated, long chain materials have the greatest fire retardant impact and are - in contrast to short or medium chain chlorinated plasticizers - not persistent, bio-accumulative or toxic. In addition, such plasticizers are still liquid at room temperature (19° - 23°C) and therefore significantly reduce the viscosity even at low processing temperatures (< 80°C). Furthermore, such plasticizers have significantly less negative impact on smoke development in comparison to brominated flame retardants.

The phosphate plasticizers can be aliphatic, chloroaliphatic or aromatic phosphoric acid esters or any combinations thereof. Preferred are phosphoric acid esters of high phosphorous content and low smoke development; especially preferred is diphenyl 2-ethylhexyl phosphate (DPO) due to its marginal smoke emission, low viscosity and low temperature resistance.

The claimed material may comprise at least one synergist for the halogen containing plasticizers / polymers and halogenated flame retardants (if present). A synergist increases the effectivity of the flame retardants in the reaction to fire in terms of smoke suppression and/or heat release. Depending on the level of the desired fire retardancy, only combinations of a synergist and conventional fire retardants can achieve the desired results. Preferred synergists are antimony (Sb), zinc (Zn), molybdeneum (Mo), tin (Sn), tungsten (W), bismuth (Bi), arsenic (As), vanadium (V) and/or zirconium (Zr) based materials, e.g. antimony trioxide, antimony pentoxide, zinc stannate, zinc hydroxystannate, zinc borate, zinc hydroxyborate, zinc molybdate, molybdenueum oxide, ammonium octamolybdate, stannous oxide, tungsten oxide, bismuth oxide, bismuth oxychloride, arsenic trioxide, arsenic pentoxide, vanadium oxide, zirconium oxide, etc, especially preferred are antimony trioxide and zinc borate. Within the claimed material, the best balance of smoke suppression and flame retardancy can be achieved at quantities below 10 phr, preferably below 6 phr, especially preferred below 4 phr.

The claimed material furthermore may comprise at least one crosslinking system such as peroxides, triallylcyanurate, triallylisocyanurate, phenylmaleimide, thiadiazoles, fatty acid amide, hydrosilylation agents, radiation activators (for radiation or UV curing), sulphur systems, bisphenolics, metal oxides etc. Preferred are sulphur and/or metal oxide and/or thiadiazole based crosslinking systems.

The claimed material additionally may comprise at least one chemical blowing agent (e.g. releasing carbon dioxide, nitrogen or oxygen) chosen from the classes of organic blowing agents and/or inorganic blowing agents. Preferred are organic blowing agents of nitroso type, azo type and/or aromatic hydrazide type, especially preferred are azo type blowing agents like azodicarbonamide.

The claimed material may further comprise at least 10 phr, preferably at least 20 phr, especially preferred at least 30 phr flame retardants, preferably chlorinated flame retardants, especially preferred are long chain (C > 17) chlorinated paraffins being solid at room temperature (19° - 23°C) and having a chlorine content of at least 60% with respect to the weight of the chlorinated flame retardant (according to DIN 53474) and/or dechloranes (chlorinated cycloaliphatics) like Dechlorane A (Dechlorane Plus^{®}), Dechlorane 602 and/or Dechlorane 603. While increasing the amount of chlorinated flame retardants within the material, the amount of synergists can be reduced, leading to a material of equal flame resistance at lower smoke emission.

The claimed material furthermore may comprise a heat and/or reversion stabilizer system. The stabilizers can be chosen from the classes of carbon blacks, metal oxides (e.g. iron oxide) and hydroxides (e.g. magnesium hydroxide), metal organic complexes, radical scavengers (e.g. tocopherol derivates), complex silicates (e.g. perlite, vermiculite), and combinations thereof.

The claimed material may further comprise ingredients like biocides, stabilizers (e.g. versus UV, ozone, reversion etc.), colours etc., of any kind in any ratio, including additives for improving its manufacturing, application and performance, such as inhibitors, retarders, accelerators, etc. The claimed material may additionally comprise additives for char-forming and/or intumescent additives, like expanding graphite, for general protection purposes and/or to close and protect e.g. wall and bulkhead penetrations. Moreover, the claimed material may comprise substances that lead to a self-ceramifying effect in case of fire, like silicon containing compounds and/or internal adhesion promoters to ensure self-adhesive properties in co-extrusion and co-lamination applications, such as silicate esters, functional silanes, polyols, etc.

The claimed material can be mixed by standard methods widespread in the rubber industry, e.g. in a (Banbury^{®}) mixer, single- or twin-screw extruder or on a mill. No specialized equipment is necessary to achieve sufficient dispersion. The shaping of the claimed material can be carried out in extruders, presses, calanders, etc. Preferred are extruders due to the possibilities of easily forming sheets and tubes and vulcanize and expand them continuously within a hot air oven, microwave oven, salt bath, etc. Preferred are hot air and microwave ovens, because - among other things - no additional cleaning steps are necessary.

The claimed material can be expanded and crosslinked to a density of less than 80 kg/m³, preferably less than 60 kg/m³, especially preferred less than 50 kg/m³ according to DIN EN ISO 845. Densities below 70 kg/m³ and in particular below 50 kg/m³ are preferred as they lead to a lower thermal conductivity.

The claimed material provides high water vapor transmission (WVT) values of ≥ 7.000 or even ≥ 10.000 according to EN13469 / EN 12086. For this reason, the application at low temperatures (< 0°C) is feasible, because the object to be insulated is well protected from under insulation corrosion (UIC) through condensation of humidity. High WVT values are, inter alia, caused by a high share of closed cells, determined by vacuum water absorption of < 10,0%, preferably < 5,0%, especially preferred < 2,5% according to ASTM D 1056.

A major advantage of the claimed material is the suitability for applications where low flame spread and low smoke generation are required. The claimed material can achieve a reliable B-s2, d0 / B_{L}-s2, d0 classification according to DIN EN 13501-1 / EN ISO 13823 (SBI test) and achieves at least a reliable 25/50 classification according to CAN ULC S 102 / ASTM E84.

It is an advantage of the claimed material that it can achieve such classifications without the use of additional, especially brominated or boron containing flame retardants, as they are still widespread and standard in the industry. The claimed material also does not require any additional coverings, coatings or the like to achieve such classifications.

Another advantage of the claimed material is the possibility of using high amounts of PVC and /or its copolymer(s) and or terpolymer(s), which are available in large amounts at low costs and improve the flame retardancy and smoke suppression, although PVC is usually known as a material creating high amounts of black smoke.

It is an advantage of the claimed material that the high level of non-crosslinked PVC and /or its copolymer(s) and or terpolymer(s) prevents the material from forming blisters and cracks due to improper ratio between expansion and vulcanisation. The claimed levels of aforementioned non-crosslinked polymers and crosslinked polymers (the additional chlorinated organic polymer) tolerate more or less a separation of vulcanisation and expansion even in manufacturing processes without counter-pressure. This means, that the claimed material can be vulcanized in a first step and afterwards expanded in a second step.

Another advantage of the claimed material is the broad range of (compressive) strength and flexibility the claimed material can be adjusted to, depending - on the one hand - on the level and ratio between plasticizers and PVC (including its homopolymers and terpolymers) and - on the other hand - the ratio between PVC and its homopolymers and/or terpolymers. A high strength and stiffness can be achieved when using high levels of PVC and low levels of PVC copolymers, PVC terpolymers and plasticizers. Such a material is favourable for applications like multilayer systems, buried insulations or insulations encased in concrete, screed, or the like. A high flexibility can be achieved when using higher levels of PVC terpolymer(s) and/or PVC copolymer(s) and/or plasticizers and low levels of PVC. Such materials are preferred for applications requiring high flexibility, like insulation in private and public buildings, where the majority of insulation is drawn or applied to pipes, elbows, ducts, etc.

It is a further advantage of the claimed material that it provides easy mounting at.required fire classifications due to its high flexibility and single layer system compared to aforementioned solutions with additional coverings, which in addition need a special handling of the seams.

A major advantage of the claimed material is the excellent suitability of the material for thermal and acoustic insulation. The material achieves a thermal conductivity of ≤ 0,037 W/m*K at 0°C (according to DIN EN 12667 / DIN EN ISO 8497) and densities below 63 kg/m³ (according to DIN EN ISO 845).

A major advantage in comparison to NBR/PVC based FEF's is the improved weathering and ozone resistance, enabling the use of the claimed material for outdoor applications without additional protective covering.

It is a prominent advantage of the claimed material that the viscosity significantly decreases during vulcanization/expansion due to the softening of PVC and/or its copolymers and/or terpolymers and thus absorbs thermal energy released by the exothermic expansion process. This leads to a very stable, tolerant and robust manufacturing process and prevents reversion of the vulcanized rubber.

Another advantage of the claimed material is its versatility regarding the production equipment. It can be produced in an economic way in a continuous process, e.g. by extrusion, co-lamination or direct co-extrusion. The material can also be laminated, moulded, co-moulded, overmoulded, welded etc. directly as mono- or multilayer system and thus it can be applied in unrestricted shaping onto various surfaces in automotive, transport, aeronautics, building and construction, marine and offshore, furniture, machinery engineering and many other industries, even by thermoforming or other shaping methods. The claimed material can particularly be manufactured in the form of tubes and sheets in a continuous process in various wall thicknesses and inner diameters; most suitable are wall thicknesses between 3 and 100mm. Wall thicknesses above 100mm tend to have some drawbacks regarding their technical properties. Most of the currently available FEF's are only available in thicknesses up to 50mm or show significant drawbacks regarding their fire classification (e.g. Kaiflex^{®} 60/80/100, fire classification according to DIN EN 13501-1: E).

A further advantage of the claimed material is the high resistance against acids, oils, lubricates and sea water.

Another advantage of the claimed material is that no questionable plasticizers are needed, like phthalate plasticizers, short or medium chain chlorinated paraffins (C<18) which are suspected of being e.g. persistent, bio-accumulative, toxic etc.

### EXAMPLES

The following examples and comparative examples were produced in a three step production process: mixing of the compounds, extrusion process and expansion and crosslinking.

The compounds were mixed in an internal batch mixer (Banbury^{®} mixer) with an average mixing time of 10 minutes and an average dumping temperature of 140°C. The compounds were homogenized further on a roller mill and the blowing agent and crosslinking system were added to the roller mill after cooling down the compound to less than 90°C.

The extrusion was performed on a strip feeded single screw vacuum extruder providing unexpanded and unvulcanized sheets and tubes. Those were crosslinked and expanded afterwards in a hot air oven cascade of 5 ovens to sheets of 25 mm wall thickness and tubes of 25 mm wall thickness and 22 mm inner diameter. Table 1 lists the raw materials used for the compounds. Table 2 gives an overview of all materials tested. Table 3 shows the recipes of the innovative examples (compounds) without additives and crosslinking agents (referred to as "additives").

**Table 1: Raw materials**

| **Chemical Name** | **Trade Name** | **Supplier** |
|---|---|---|
| Polyvinyl chloride (PVC) | Vinnolit^{®} S3265 | Vinnolit, Germany |
| vinyl chloride ethylene vinylacetate terpolymer (PVC/EVA terpolymer) | Vinyl Resin LC13-1 | Shexian Sinfeng Chem.Co.Ltd, China |
| vinyl chloride vinyl acetate copolymer (PVC/VA copolymer) | Kanevinyl™ MB1008 | Kaneka Corporation, Japan |
| Polychloroprene (CR) | Neoprene^{®} WM-1 | DuPont^{®}, USA |
| Chlorosulfonated Polyethylene (CSM) | TOSO-CSM^{®} TS-430 | Tosoh Corporation, Japan |
| Chlorobutyl rubber (CIIR) | Exxon™ Chlorobutyl 1066 | ExxonMobil Corporation, USA |
| Butadiene rubber (BR) | Buna^{®} CB 24 F | Lanxess, Germany |
| Chloroparaffin (CP) | Cereclor^{®} 46 | Ineos^{®} Chlor Ltd., Switzerland |
| Diphenyl-2-ethylhexyl phosphate (DPO) | Disflamoll^{®} DPO | Lanxess, Germany |
| Carbon black (CB) | Corax^{®} N550 | Evonik Industries, Germany |
| Aluminium hydroxide (ATH) | AluMill^{®} F280 | Europe Minerals, Netherlands |
| Huntite / hydromagnesite mixture (HH) | Securoc^{®} C10 | Ankerport, Netherlands |
| Antimony trioxide (ATX) | Triox^{®} Triox^{®} | Produits Chimiques de Lucette, France |
| Zinc borate (ZB) | Firebrake^{®} ZB | Borax, USA |
| Azodicarbonamide (ADC) | Unicell^{®} D 300 K | Tramaco, Germany |
| Chlorinated flame retardant (CF) | CP 70 XF | Everkem, Italy |

Table 2 shows an overview of the tested materials and their basic compositions. All materials were available as sheets in 25mm wall thickness and tubes in 25mm wall thickness and 22mm inner diameter. Materials marked with an "*" are comparative examples, the other materials are innovative examples.

**Table 2: Comparative and innovative examples**

| **No.** | **Name** | **Polymer** | **Flame retardant** | **Miscellaneous** |
|---|---|---|---|---|
| 1* | Kaiflex^{®} EPDM plus | EPDM | brominated | |
| 2* | Aeroflex^{®} FIRO | NBR/PVC | brominated | |
| 3* | K-Flex^{®} ST | NBR/PVC | brominated | |
| 4* | Kaiflex^{®} KKplus s2 sheet | NBR/PVC | brominated | Additional layer on top |
| 5* | Armaflex^{®} Ultima | CR | chlorinated | |
| 6* | | CR/PVC | none | |
| 7 | | PVC / CR | none | |
| 8 | | PVC / CR / BR | chlorinated | |
| 9 | | PVC/EVA terpolymer / CR/BR | none | |
| 10 | | PVC/EVA terpolymer / CR/BR | chlorinated | |
| 11 | | PVC/VA copolymer / CSM / CIIR / BR | none | |

**Table 3: Composition of the innovative examples and comparative example 6**

| | 6* | 7 | 8 | 9 | 10 | 11 |
|---|---|---|---|---|---|---|
| Polyvinyl chloride (PVC) | 48,0 | 60,0 | 70,0 | | | |
| vinyl chloride ethylene vinylacetate terpolymer (PVC/EVA terpolymer) | | | | 67,0 | 65,0 | |
| vinyl chloride vinyl acetate copolymer (PVC/VA copolymer) | | | | | | 65,0 |
| Polychloroprene (CR) | 52,0 | 40,0 | 25,0 | 30,0 | 25,0 | |
| Chlorosulfonated Polyethylene (CSM) | | | | | | 15,0 |
| Chlorobutyl rubber (CIIR) | | | | | | 12,0 |
| Butadiene rubber (BR) | | | 5,0 | 3,0 | 10,0 | 8,0 |
| Chloroparaffin (CP) | 30,0 | 50,0 | 55,0 | 45,0 | 52,0 | 50,0 |
| Diphenyl-2-ethylhexyl phosphate (DPO) | 5,0 | | 7,0 | 3,0 | 5,0 | 6,0 |
| Carbon black (CB) | 10,0 | 8,0 | 20,0 | 20,0 | 15,0 | 15,0 |
| Aluminium hydroxide (ATH) | 120,0 | 130,0 | 100,0 | 110,0 | 150,0 | 167,0 |
| Huntite / hydromagnesite mixture (HH) | 30,0 | 40,0 | 70,0 | 90,0 | 40,0 | |
| Antimony trioxide (ATX) | 5,0 | 3,0 | 4,0 | 2,0 | 1,5 | 2,0 |
| Zinc borate (ZB) | | 2,5 | | 3,0 | 2,0 | 6,5 |
| Azodicarbonamide (ADC) | 35,0 | 42,0 | 43,0 | 45,0 | 48,0 | 41,0 |
| Chlorinated flame retardant (CF) | | | 20,0 | | 30,0 | |
| Additives (AD) | 20,0 | 22,0 | 19,0 | 24,0 | 30,0 | 17,0 |
| Σ | 355,0 | 397,5 | 438,0 | 442,0 | 473,5 | 404,5 |

Table 4 presents the flammability test results of all innovative and comparative examples. The SBI test was performed on both tubes and sheets (except from comparative example 4, which is only available as sheet material), the ASTM E84 test was performed on sheets only. Table 5 presents the densities (according to DIN EN ISO 845), thermal conductivities (according to DIN EN 12667) and water vapour transmission values (WVT, according to EN 12086) test results of all examples (limited to sheets).

**Table 4: Flammability test results of all examples**

| Material | SBI (EN 13823) | | ASTM E 84 |
|---|---|---|---|
| | sheets | tubes | sheets |
| 1* | E | E | 65/380 |
| 2* | B-s3, d0 | B_{L}-s3, d0 | 20/320 |
| 3* | B-s3, d0 | B_{L}-s2, d0 | 15/380 |
| 4* | B-s2, d0 | --- | 20/80 |
| 5* | B-s2, d0 | B_{L}-s1, d0 | 5/30 |
| 6* | C-s3, d0 | B_{L}-s3, d0 | 25/190 |
| 7 | B-s3, d0 | B_{L}-s2, d0 | 18/60 |
| 8 | B-s2, d0 | B_{L}-s2, d0 | 20/50 |
| 9 | C-s2, d0 | B_{L}-s2, d0 | 23/40 |
| 10 | B-s2, d0 | B_{L}-s1, d0 | 15/30 |
| 11 | B-s2, d0 | B_{L}-s2, d0 | 20/25 |

**Table 5: Density, thermal conductivity and WVT of all examples**

| Material | Density | Thermal conductivity | WVT |
|---|---|---|---|
| | [kg/m³] | [W/(m*K)] | |
| 1* | 68,0 | 0,038 | 4500 |
| 2* | 52,0 | 0,033 | 10000 |
| 3* | 50,5 | 0,033 | 10000 |
| 4* | 73,0 | 0,033 | 10000 |
| 5* | 70,0 | 0,040 | 7000 |
| 6* | 72,0 | 0,041 | 5000 |
| 7 | 62,0 | 0,037 | 7000 |
| 8 | 53,0 | 0,035 | 9000 |
| 9 | 47,0 | 0,033 | 12000 |
| 10 | 49,0 | 0,034 | 14000 |
| 11 | 55,0 | 0,035 | 10000 |

## Claims

1. An expanded polymeric material obtained from an expandable polymeric material which consists of at least 300 phr, preferably at least 400 phr, but less than 1000 phr, preferably less than 850 phr, especially preferred less than 700 phr ingredients in total, comprising a total of 100 phr of at least two polymers, of which
1) at least 55 phr, preferably at least 65 phr is polyvinyl chloride (PVC) or vinyl chloride copolymer or vinyl chloride terpolymer or a mixture thereof and
2) at least 15 phr, preferably at least 25 phr is at least one additional chlorinated organic polymer,
and at least 80 phr, preferably at least 120 phr, especially preferred at least 160 phr of at least one inorganic filler, the at least one additional chlorinated organic polymer being crosslinked by sulphur and/or metal oxides and/or thiadiazoles.

2. The material according to claim 1, wherein the vinyl chloride copolymer and/or vinyl chloride terpolymer comprises acetate or acrylate groups.

3. The material according to claim 1 or 2, wherein the vinyl chloride terpolymer is a vinyl chloride ethylene vinylacetate terpolymer (PVC/EVA terpolymer).

4. The material according to claim 1, wherein the additional chlorinated organic polymer is polychloroprene (CR) and/or chlorosulfonated polyethylene (CSM) and/or chlorobutyl rubber (CIIR), preferably polychloroprene (CR).

5. The material according to any of claims 1 to 4, comprising at least 3 phr, preferably at least 5 phr of polybutadiene.

6. The material according to any of claims 1 to 5, comprising at least one plasticizer which is present in the formulation in at least 15 phr, preferably at least 30 phr, especially preferred at least 50 phr.

7. The material according to claim 6, wherein at least one plasticizer is a chlorinated plasticizer, such as chlorinated paraffin and/or chlorinated fatty acid substituted glycerin and/or chlorinated alpha-olefin, preferably a chlorinated plasticizer having a chlorine content of at least 20 wt%, preferably at least 30 wt%, especially preferred at least 45 wt%, with respect to the weight of the chlorinated plasticizer, according to DIN 53474, especially preferred a long chain chlorinated plasticizer with a minimum chain length of C > 17.

8. The material according to claim 6, wherein at least one plasticizer is a phosphate plasticizer, preferably a phosphoric acid ester, especially preferred diphenyl-2-ethylhexyl phosphate (DPO).

9. The material according to any of claims 1 to 8, comprising at least 10 phr, preferably at least 20 phr, especially preferred at least 30 phr of at least one chlorinated flame retardant, preferably a long chain chlorinated paraffin being solid at room temperature, i.e. between 19° and 23°C, and having a chlorine content of at least 60% with respect to the weight of the chlorinated flame retardant, according to DIN 53474.

10. The material according to any of claims 1 to 9, wherein the inorganic filler is of metal and/or half metal chalcogen nature, preferred are inorganic fillers that release water and/or carbon dioxide and/or carbon monoxide at temperatures above 180°C, especially preferred are aluminium hydroxide, magnesium hydroxide, huntite and/or hydromagnesite.

11. The material according to any of claims 1 to 10, comprising at least one synergist for the chlorinated flame retardants and/or chlorinated plasticizers and/or chlorinated polymers, preferably antimony trioxide or zinc borate or a mixture thereof.

12. The material according to any of claims 1 to 11, which is expanded to a density of less than 80 kg/m³, preferably less than 60 kg/m³, especially preferred less than 50 kg/m³ according to DIN EN ISO 845.

13. The material according to any of claims 1 to 12, which has a closed cell structure, determined by a vacuum water absorption of < 10,0%, preferably < 5,0%, especially preferred < 2,5% according to ASTM D 1056.

14. A process for manufacturing the material according to any of claims 1 to 13, wherein the polymeric material is expanded by decomposition of a chemical blowing agent, preferably of nitroso type, azo type and/or aromatic hydrazide type, especially preferred is azodicarbonamide.

15. The use of a material according to any of claims 1 to 13 for thermal and/or acoustic insulation.

## Patentansprüche

1. Geschäumtes Polymermaterial, erhalten aus einem schäumbaren Polymermaterial, das aus wenigstens 300 phr, vorzugsweise wenigstens 400 phr, jedoch weniger als 1000 phr, vorzugsweise weniger als 850 phr und besonders bevorzugt weniger als 700 phr Komponenten insgesamt besteht, umfassend eine Gesamtheit von 100 phr aus wenigstens zwei Polymeren, von denen
1) wenigstens 55 phr, vorzugsweise wenigstens 65 phr auf Polyvinylchlorid (PVC) oder Vinylchlorid-Copolymer oder Vinylchlorid-Terpolymer oder ein Gemisch davon entfallen und
2) wenigstens 15 phr, vorzugsweise wenigstens 25 phr auf wenigstens ein zusätzliches chloriertes organisches Polymer entfallen und wenigstens 80 phr, vorzugsweise wenigstens 120 phr, besonders bevorzugt wenigstens 160 phr auf wenigstens einen anorganischen Füller entfallen, wobei das wenigstens eine zusätzliche chlorierte organische Polymer mit Schwefel und/oder Metalloxiden oder Thiadiazolen vernetzt ist.

2. Material nach Anspruch 1, wobei das Vinylchlorid-Copolymer und/oder Vinylchlorid-Terpolymer Acetat- oder Acrylatgruppen umfassen.

3. Material nach Anspruch 1 oder 2, wobei das Vinylchlorid-Terpolymer ein Vinylchlorid-Ethylenvinylacetat-Terpolymer (PVC/EVA-Terpolymer) ist.

4. Material nach Anspruch 1, wobei das zusätzliche chlorierte organische Polymer Polychloropren (CR) und/oder chlorsulfoniertes Polyethylen (CSM) und/oder Chlorbutylkautschuk (CIIR), vorzugsweise Polychloropren (CR) ist.

5. Material nach einem der Ansprüche 1 - 4, umfassend wenigstens 3 phr, vorzugsweise wenigstens 5 phr Polybutadien.

6. Material nach einem der Ansprüche 1 - 5, umfassend wenigstens einen Weichmacher, der in der Formulierung mit wenigstens 15 phr, vorzugsweise mit wenigstens 30 phr, besonders bevorzugt mit wenigstens 50 phr vorliegt.

7. Material nach Anspruch 6, wobei wenigstens 1 Weichmacher ein chlorierter Weichmacher wie chloriertes Paraffin und/oder chloriertes fettsäuresubstituiertes Glycerin und/oder chloriertes α-Olefin, vorzugsweise ein chlorierter Weichmacher mit einem Chloringehalt von wenigstens 20 Gew.-%, vorzugsweise von wenigstens 30 Gew.-%, besonders bevorzugt von wenigstens 45 Gew.-% ist, bezogen auf das Gewicht des chlorierten Weichmachers, nach DIN 53474, besonders bevorzugt ein langkettiger chlorierter Weichmacher mit einer Mindestkettenlänge von C > 17.

8. Material nach Anspruch 6, wobei wenigstens 1 Weichmacher ein Phosphatweichmacher, vorzugsweise ein Phosphorsäureester, besonders bevorzugt ein Diphenyl-2-ethylhexylphosphat (DPO) ist.

9. Material nach einem der Ansprüche 1 - 8, umfassend wenigstens 10 phr, vorzugsweise wenigstens 20 phr, besonders bevorzugt wenigstens 30 phr wenigstens eines chlorierten Flammschutzmittels, vorzugsweise ein bei Raumtemperatur, d.h. zwischen 19 und 23 °C, festes langkettiges chloriertes Paraffin mit wenigstens einem Chlorgehalt von wenigstens 60 %, bezogen auf das Gewicht des chlorierten Falmmschutzmittels nach DIN 53474.

10. Material nach einem der Ansprüche 1 - 9, wobei der anorganische Füller auf einem Metall und/oder einem Halbmetallchalcogen beruht, vorzugsweise anorganische Füller darstellt, die Wasser und/oder CO₂ und/oder CO bei Temperaturen von über 180 °C freisetzen, besonders bevorzugt Aluminiumhydroxid, Magnesiumhydroxid, Huntit und/oder Hydromagnesit.

11. Material nach einem der Ansprüche 1 - 10, umfassend wenigstens einen Synergisten für die chlorierten Flammschutzmittel und/oder chlorierten Weichmacher und/oder chlorierten Polymere, vorzugsweise Antimonytrioxid oder Zinkborat oder ein Gemisch davon.

12. Material nach einem der Ansprüche 1 - 11, das bis zu einer Dichte von unter 80 kg/m³, vorzugsweise von unter 60 kg/m³, besonders bevorzugt von unter 50 kg/m³ nach DIN EN ISO 845 geschäumt ist.

13. Material nach einem der Ansprüche 1 - 12, das eine geschlossenzellige Struktur aufweist, ermittelt durch Vakuumwasserabsorption von < 10,0 %, vorzugsweise von < 5,0 %, besonders bevorzugt von < 2,5 % nach ASTM D 1056.

14. Verfahren zur Herstellung des Materials nach einem der Ansprüche 1 - 13, wobei das Polymermaterial durch Zersetzung eines chemischen Blähmittels, vorzugsweise vom Nitrosotyp, Azotyp und/oder aromatischem Hydrazidtyp, besonders bevorzugt Azodicarbonamid, geschäumt wird.

15. Verwendung eines Materials nach einem der Ansprüche 1 - 13 zur Wärme- und/oder Schallisolierung.

## Revendications

1. Matériau polymère expansé obtenu à partir d'un matériau polymère expansible qui est constitué d'au moins 300 phr, de préférence d'au moins 400 phr, mais de moins de 1000 phr, de préférence moins de 850 phr, particulièrement préféré moins de 700 phr d'ingrédients au total, comprenant un total de 100 phr d'au moins deux polymères, dont
1) au moins 55 phr, de préférence au moins 65 phr est du chlorure de polyvinyle (PVC) ou un copolymère chlorure de vinyle ou un terpolymère chlorure de vinyle ou un de leurs mélanges et
2) au moins 15 phr, de préférence au moins 25 phr est au moins un polymère organique chloré supplémentaire,
et au moins 80 phr, de préférence au moins 120 phr, particulièrement préféré au moins 160 phr d'au moins une charge inorganique,
le au moins un polymère organique chloré supplémentaire étant réticulé par du soufre et/ou des oxydes métalliques et/ou des thiadiazoles.

2. Matériau selon la revendication 1, dans lequel le copolymère chlorure de vinyle et/ou le terpolymère chlorure de vinyle comprend des groupes acétate ou acrylate.

3. Matériau selon la revendication 1 ou 2, dans lequel le terpolymère chlorure de vinyle est un terpolymère chlorure de vinyle-éthylène-acétate de vinyle (terpolymère PVC/EVA).

4. Matériau selon la revendication 1, dans lequel le polymère organique chloré supplémentaire est le polychloroprène (CR) et/ou le polyéthylène chlorosulfoné (CSM) et/ou le caoutchouc de chlorobutyle (CIIR), de préférence le polychloroprène (CR).

5. Matériau selon l'une quelconque des revendications 1 à 4, comprenant au moins 3 phr, de préférence au moins 5 phr de polybutadiène.

6. Matériau selon l'une quelconque des revendications 1 à 5, comprenant au moins un plastifiant qui est présent dans la formulation dans au moins 15 phr, de préférence au moins 30 phr, particulièrement préféré d'au moins 50 phr.

7. Matériau selon la revendication 6, dans lequel au moins un plastifiant est un plastifiant chloré, tel que la paraffine chlorée et/ou la glycérine substituée par un acide gras chloré et ou une alpha-oléfine chlorée, de préférence un plastifiant chloré ayant une teneur en chlore d'au moins 20 % en poids, de préférence d'au moins 30 % en poids, particulièrement préféré d'au moins 45 % en poids par rapport au poids du plastifiant chloré, selon DIN 53474, particulièrement préféré un plastifiant chloré à longue chaîne avec une longueur de chaîne minimum de C > 17.

8. Matériau selon la revendication 6, dans lequel au moins un plastifiant est un plastifiant phosphate, de préférence un ester d'acide phosphorique, particulièrement préféré le phosphate de diphényl-2-éthylhexyle (DPO).

9. Matériau selon l'une quelconque des revendications 1 à 8, comprenant au moins 10 phr, de préférence au moins 20 phr, particulièrement préféré au moins 30 phr d'au moins un retardateur de flamme chloré,
de préférence une paraffine chlorée à longue chaîne qui est solide à température ambiante, c'est-à-dire entre 19 ° et 23 °C, et ayant une teneur en chlore d'au moins 60 % par rapport au poids du retardateur de flamme chloré, selon DIN 53474.

10. Matériau selon l'une quelconque des revendications 1 à 9, dans lequel la charge inorganique est de nature métallique et/ou de nature chalcogène semi métallique, les charges inorganiques préférées sont celle qui libèrent de l'eau et/ou du dioxyde de carbone et/ou du monoxyde de carbone à des températures au-dessus de 180 °C, particulièrement préférés sont l'hydroxyde d'aluminium, l'hydroxyde de magnésium l'huntite et/ou l'hydromagnésite.

11. Matériau selon l'une quelconque des revendications 1 à 10, comprenant au moins un synergiste pour les retardateurs de flamme chlorés et/ou les plastifiants chlorés et/ou les polymères chlorés, de préférence le trioxyde d'antimoine ou le borate de zinc ou une de leurs combinaisons.

12. Matériau selon l'une quelconque des revendications 1 à 11, qui est expansé à une densité de moins de 80 kg/m³, de préférence de moins de 60 kg/m³, particulièrement préféré de moins de 50 kg/m³ selon DIN EN ISO 845.

13. Matériau selon l'une quelconque des revendications 1 à 12, qui a une structure cellulaire fermée, déterminée par une absorption d'eau sous vide de <10,0 %, de préférence <5,0 %, particulièrement préféré de <2,5 % selon ASTM D 1056.

14. Procédé de fabrication du matériau selon l'une quelconque des revendications 1 à 13, dans lequel le matériau polymère est expansé par décomposition d'un agent gonflant chimique, de préférence de type nitroso, de type azo et/ou de type hydrazure aromatique, particulièrement préféré est l'azodicarbonamide.

15. Utilisation d'un matériau selon l'une quelconque de revendications 1 à 13 pour l'isolation thermique et/ou acoustique.
